# EUROPÄISCHE PATENTSCHRIFT

(11) **EP 1 515 905 B1**
(45) Veröffentlichungstag und Bekanntmachung des Hinweises auf die Patenterteilung: **31.10.2007**
(21) Anmeldenummer: 03725152.7
(22) Anmeldetag: 06.05.2003
(51) Int. Cl.: B65G 47/08

(54) **VORRICHTUNG ZUR BILDUNG VON STAPELN**
DEVICE FOR PRODUCING STACKS
DISPOSITIF DE FORMATION DE PILES

(30) Priorität: 17.06.2002 DE 10228061
(43) Veröffentlichungstag der Anmeldung: 23.03.2005
(73) Patentinhaber: OPTIMA filling and packaging machines GmbH, 74523 Schwäbisch Hall (DE)
(72) Erfinder: ORTH, Heribert, 74532 Ilshofen (DE)
(74) Vertreter: Patentanwälte Ruff, Wilhelm, Beier, Dauster & Partner
(86) Internationale Anmeldenummer: PCT/EP2003/004690
(87) Internationale Veröffentlichungsnummer: WO 2004/005168

(56) Entgegenhaltungen:
- EP-A- 0 943 562
- EP-A- 0 995 702
- EP-A- 1 148 014
- US-A- 4 768 642

## Beschreibung

Die Erfindung betrifft eine Vorrichtung zur Bildung von Stapeln aus einzelnen Produkten. Produkte, die direkt aus der Herstellmaschine kommen, müssen zu Stapeln zusammengefasst werden. Dies geschieht beispielsweise dadurch, dass die Produkte einzeln einer Kette mit Fachunterteilungen zugeführt werden. In jedes Fach kommt beispielsweise ein einzelnes Produkt zu liegen. Die Fächer sind beispielsweise an einer Rollenkette befestigt. Am Ende des Transportweges dieser Reihe von Fächern werden die Produkte dann quer zur Bewegungsrichtung ausgeschoben und bilden dadurch jetzt einen Stapel. Dieser Stapel kann weiterverarbeitet werden, beispielsweise verpackt werden.

Die Produktzuführung geschieht über Transportbänder. Dabei werden die einzelnen Produkte zwischen zwei Riemen eingeklemmt. Der Riemen wird angetrieben, so dass die Produkte dann befördert werden.

Damit die Produkte ausgeschoben werden können, müssen die Trennwände zwischen den einzelnen Fächer niedriger sein als es der Höhe der Produkte entspricht. Beispielsweise sind die Produkte doppelt so hoch wie die Trennwände zwischen den Fächern. Die Übergabe zwischen der Zuführeinrichtung und der sich bewegenden Reihe von Fächern geschieht, ohne dass die Fächer still stehen. Die Produkte werden also mit einer gewissen Geschwindigkeit in die Fächer eingebracht. Dies geschieht beispielsweise von oben. Auf dem letzten Teil der Bewegung können die Produkte aus den genannten Gründen nicht geführt werden. Sie prallen daher mit einer gewissen Geschwindigkeit auf dem Boden der Fächer auf, was zu einem Zurückprallen führen kann. Da es sich bei den Produkten häufig um solche handelt, die keine exakte Form oder Größe aufweisen, sondern auch in sich instabil sind, besteht die Gefahr, dass bei schnell laufenden Vorrichtungen ein Produkt sein Fach nicht trifft. Dann liegt das Produkt oberhalb der Trennwände und hindert die nachfolgenden Produkte daran, ihr eigenes Fach zu finden.

Diese Problematik tritt insbesondere dann auf, wenn der Zuführweg der Produkte vertikal verläuft.

Es ist bereits eine Vorrichtung zur Bildung von Stapeln bekannt, bei der eine Zuführeinrichtung einzelne Produkte von oben in ein Fach einer kontinuierlich bewegbaren Reihe von Fächern fallen lässt. Das Einführen der Produkte geschieht an der Umlenkstelle des Förderers, da an dieser Stelle die Fächer trichterförmig erweitert werden (US 4768642).

Bei einer weiteren bekannten Einrichtung zur Bildung von Stapeln (EP 943562) ist die Zuführeinrichtung so ausgebildet, dass ihr den Fächern zugewandtes Ende in Transportrichtung der Fächer hin- und hergehend verschiebbar ist. Dadurch wird es möglich, nebeneinander liegende Fächer auch dann mit Produkten zu füllen, wenn die Reihe von Fächern nicht bewegt wird.

Bei einer nochmals weiteren Einrichtung zur Bildung von Stapeln (EP 995702) ist zwischen der Zuführeinrichtung und der Reihe von Fächern ein Trichter angeordnet, der um eine Achse pendelnd aufgehängt ist. Er bewegt sich bei der Übergabe eines Gegenstandes zunächst mit der Reihe von Fächern, anschließend in entgegengesetzter Richtung.

Der Erfindung liegt die Aufgabe zu Grunde, eine Vorrichtung zur Bildung von Stapeln aus Produkten so auszugestalten, dass sie auch bei hohen Arbeitsgeschwindigkeiten zuverlässig und störungsfrei arbeiten kann.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Die Zuführeinrichtung führt die Produkte hintereinander zu. Die Zuführrichtung ist dabei im wesentlichen senkrecht angeordnet, kann jedoch auch leicht schräg gegenüber einer Senkrechten verlaufen. Von der Abgabestelle der Zuführeinrichtung an werden die Produkte ohne Führung durch die Zuführeinrichtung weiter bewegt, wobei sie schon bei Verlassen der Zuführeinrichtung eine nicht unbeträchtliche Geschwindigkeit haben. Mit dieser Geschwindigkeit fallen sie dann in die Fächer hinein. In dem Bereich zwischen der Abgabestelle und dem Beginn des Fachs werden sie von der von der Erfindung vorgeschlagenen Führungseinrichtung seitlich geführt, so dass sichergestellt ist, dass die Produkte ihr jeweils eigenes Fach finden. Auch ein Zurückprallen führt nicht dazu, dass sie ihr Fach verlassen.

Der Abstand zwischen dem Abgabeende der Zuführeinrichtung und der Oberkante von Trennungen zwischen den Fächern kann in Weiterbildung Erfindung größer als die Hälfte der Länge der Produkte im Fallrichtung gemessen sein. An diesen Stellen greift die Führungseinrichtung an.

Die Führungseinrichtung kann beispielsweise derart ausgebildet sein, dass sie mindestens zwei synchron mit der Reihe von Fächern mitbewegte Leitelemente aufweist, die vorzugsweise als Leitschaufeln ausgebildet sind. Die Leitelemente brauchen dabei nur im Bereich der Abgabestelle mit den Fächern mitbewegt zu werden. Sobald das Produkt in seinem Fach angeordnet ist, können die Leitschaufeln wieder aus der Reihe von Produkten herausgezogen werden.

Insbesondere kann vorgesehen sein, dass die Leitelemente derart angeordnet sind, dass sie eine Verlängerung des der Abgabestelle zugeordneten Fachs der Reihe von Fächern bilden. Das Fach wird also praktisch bis zur Abgabestelle verlängert.

Erfindungsgemäß kann vorgesehen sein, dass die Führungseinrichtung derart angeordnet ist, dass sie nur im Bereich der Übergabestelle wirksam ist. Es ist selbstverständlich auch möglich, sie so auszugestalten, dass sie noch eine gewisse Strecke hinter der Übergabestelle wirksam ist, um eine Beruhigung der Produkte zu bewirken.

Die Führungseinrichtung ist als umlaufende Einrichtung ausgebildet. Sie weist mehrere umlaufende Leitelemente auf, deren Bahn im Bereich der Übergabestelle mit dem Weg der Fächerreihe übereinstimmt.

Eine Möglichkeit, wie die Leitelemente als umlaufende Elemente ausgestattet sein können, besteht darin, sie an einer umlaufenden Kette anzubringen. Dabei können die Leitelemente so geführt werden, dass das zwischen zwei Produkten angeordnete Leitelement quer zur Bewegungsrichtung der Reihe von Fächern heraus bewegt wird. Das jeweils andere Leitelement greift ja an dem letzten Produkt einer Reihe an, so dass es schwenkend bewegt werden kann.

Es ist möglich, die beiden jeweils einem Fach zugeordneten Leitelemente der Führungseinrichtung so zu justieren, dass das Produkt leicht eingeklemmt wird. Dadurch lässt sich ein Zurückspringen vollständig verhindern.

Wenn das Produkt falsch positioniert aus der Herstelllinie kommt und dadurch sein Fenster in der unteren Reihe von Fächern verpasst, wird es von einem der Leitelemente der Führungseinrichtung aus dem Bereich zwischen Zuführeinrichtung und Fächern heraus geschleudert. Dadurch wird verhindert, dass es zu einer Staubbildung führt. Es treten dann keine Folgefehler auf. Der einzige Nachteil wäre in einem solchen Fall, dass ein Stapel ein Produkt weniger enthält als geplant.

Weitere Merkmale, Einzelheiten und Vorzüge der Erfindung ergeben sich aus der folgenden Beschreibung einer bevorzugten Ausführungsform der Erfindung, den Patentansprüchen sowie anhand der Zeichnung. Hierbei zeigen:
- Figur 1: schematisch die von der Erfindung vorgeschlagene Vorrichtung ohne Produkte;
- Figur 2: einen schematischen Schnitt längs Linie II - II in Figur 1;
- Figur 3: vereinfacht die Anordnung eines Produkts während der Übergabe von der Zuführeinrichtung zu einem Fach.

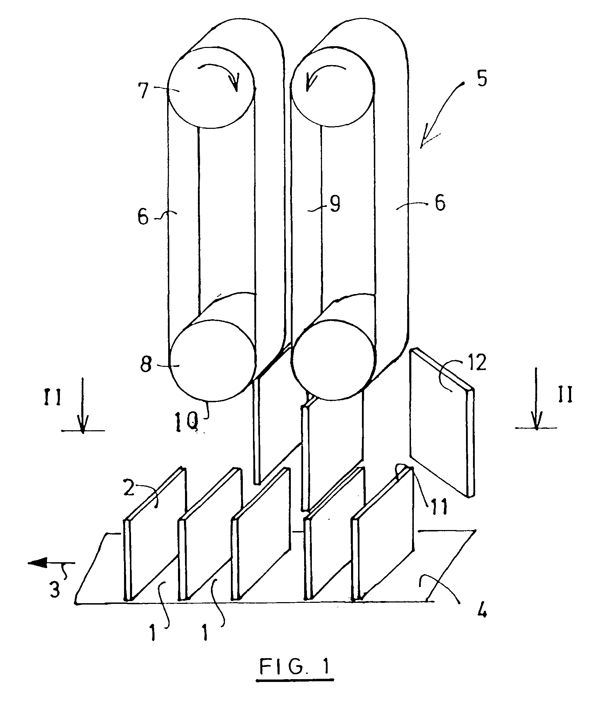

Figur 1 zeigt in einer vereinfachten Übersicht die verschiedenen Teile der von der Erfindung vorgeschlagenen Vorrichtung. Die Vorrichtung zur Bildung von Stapeln von Produkten enthält eine Reihe von Fächern 1, die durch Trennungen beispielsweise in Form von Trennwänden 2 definiert sind. Diese Trennwände 2 bilden zwischen sich jeweils ein einzelnes Fach zur Aufnahme eines Produkts. Die Trennwände 2 werden in Richtung des Pfeils 3 bewegt, und zwar kontinuierlich ohne Stillstand. Die Fächer werden durch einen Boden 4 abgeschlossen. Es ist möglich, dass die Trennwände 2 direkt mit dem Boden 4 verbunden sind, so dass sich der Boden 4 zusammen mit den Trennwänden 2 bewegt. Ebenfalls möglich ist es, dass die Trennwände 2 vor oder hinter der Zeichnungsebene mit einer Antriebskette verbunden sind und sich unabhängig von dem Boden 4 bewegen. Der Boden 4 kann auch feststehend sein. Dann werden die Produkte über den Boden 4 geschoben. Wichtig ist, dass die Fächer 1 zwischen je zwei Trennwänden 2 in Richtung des Pfeils 3 bewegt werden.

Oberhalb der Reihe von Fächern 1 ist eine Zuführeinrichtung 5 angeordnet, die einzelne Produkte hintereinander der Reihe von Fächern zuführt. Im dargestellten Beispiel enthält die Zuführeinrichtung 5 zwei umlaufende Riemen 6, die vereinfacht dargestellt um zwei Antriebswalzen 7, 8 herumgeführt und von diesen angetrieben werden. Die einander zugewandten inneren Trums 9 der beiden Riemen 6 bewegen sich beide nach unten. Das untere Ende 10 der Zuführeinrichtung liegt oberhalb der Oberkante 11 der Trennwände 2. In diesem Bereich zwischen der Oberkante 11 der Trennwände 2 und der Unterseite 10 der Zuführeinrichtung 5 ist eine weitere Einrichtung mit einzelnen Leitelementen 12 angeordnet. Diese Leitelemente 12 bewegen sich in dem Raum zwischen der Abgabestelle der Zuführeinrichtung 5 und der Oberkante 11 der Trennwände 2. Sie haben eine Höhe, die etwas kleiner ist als der Abstand zwischen den beiden genannten Stellen. In dem unterhalb der Zuführeinrichtung 5 liegenden Bereich bewegen sich die Leitelemente 12 mit der gleichen Geschwindigkeit wie die Trennwände 2 der Fächer 1.

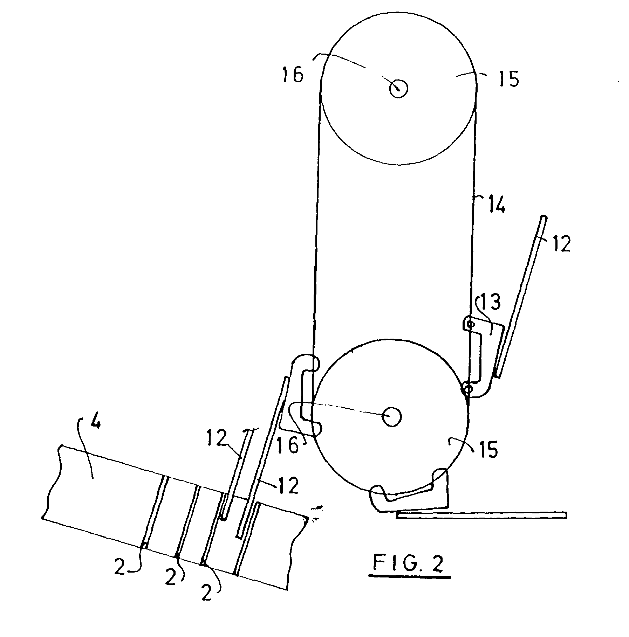

Figur 2 zeigt, wie die Leitelemente 12 als Leitschaufeln mit Hilfe von Schuhen 13 an einer umlaufenden Kette 14 angebracht sind. Die Kette 14 ist um zwei Zahnräder 15 herum geführt, die um vertikale Achsen 16 verdreht werden können. Durch die Anordnung der Leitelemente 12 an den Schuhen 13 kann dafür gesorgt werden, dass sich die Leitelemente 12 mit einer bestimmten Kinematik im Bereich der Übergabestelle zwischen der Zuführeinrichtung 5 und der Fächerreihe bewegen. Da die Zuführeinrichtung 5 immer das letzte Produkt einer Reihe herbeiführt, kann das in Figur 1 und Figur 2 rechte Leitelemente 12 eine Schwenkbewegung durchführen, da es über ein leeres Fach verschwenkt wird. Das jeweils linke Leitelemente 12 in Figur 1 wird dagegen so geführt, dass es sich quer zur Bewegungsrichtung der Reihe von Fächern nach hinten zurückzieht. Das relativ schnelle Umklappen der Leitelemente 12 kann durch die in Figur 2 schematisch dargestellte Einrichtung erreicht werden. Selbstverständlich ist es auch möglich, eine spezielle Kinematik noch dadurch zu fördern, dass die Leitelemente 12 in Kurvenführungen oder dergleichen eingreifen

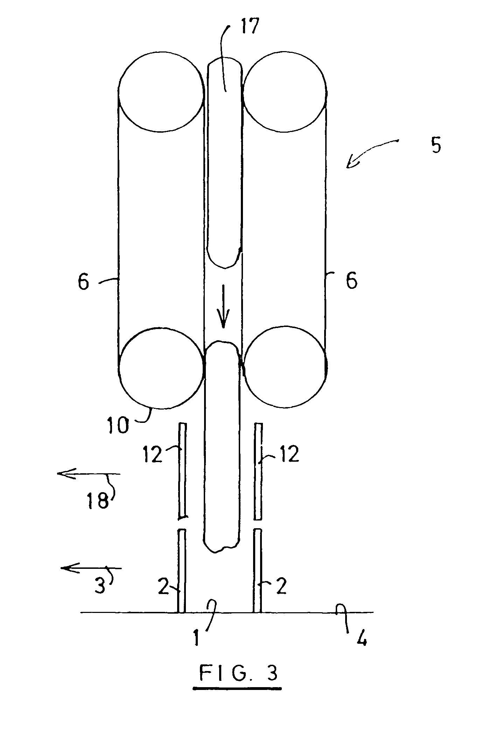

Figur 3 zeigt nun stark vereinfacht und direkt von vorne den Vorgang, wie ein zu einem Stapel zusammenzuführendes Produkt im Abgabebereich der Zuführeinrichtung 5 nach unten bewegt wird. Die Produkte 17 werden durch die sich bewegenden Riemen 6 mit einer relativ hohen Geschwindigkeit nach unten bewegt und prallen dann auf dem Boden 4 eines Fachs 1 auf. Figur 3 zeigt den Zustand kurz vor dem Loslassen zwischen den Riemen 6 und dem Auftreffen auf dem Boden 4. Unmittelbar oberhalb der Trennwände 2 zwischen den einzelnen Fächern 1 sind die Leitelemente 12 der Führungseinrichtung angeordnet. Sie bewegen sich mit der gleichen Geschwindigkeit und gegenüber den Trennwänden 2 ausgerichtet in Richtung des Pfeils 18. Dadurch können die Produkte 17 exakt ihr richtiges Fach finden und es wird verhindert, dass sie eine Störung nachfolgender Fächer bewirken können.

Wie bereits erwähnt wurde ist es möglich, die Leitelemente 12 so zu führen, dass sie enger aneinander herein gerückt sind, um dadurch das Produkt 17 noch besser zu führen und auch gegebenenfalls ein Zurückspringen zu verhindern.

## Patentansprüche

1. Vorrichtung zur Bildung von Stapeln aus Produkten (17), mit
1.1 einer im wesentlichen horizontalen kontinuierlich bewegbaren Reihe von Fächern (1),
1.2 einer Zuführeinrichtung (5), die
1.2.1 einzelne Produkte (17) hintereinander zu einer Abgabestelle oberhalb der Reihe von Fächern (1) befördert und
1.2.2 die Produkte (17) in die Fächer (1) fallen lässt oder wirft, sowie mit
1.3 einer Führungseinrichtung (12), die
1.3.1 jeweils ein Produkt (17) zwischen der Abgabestelle der Zuführeinrichtung und dem dem Produkt (17) zugeordneten Fach (1) führt
**dadurch gekennzeichnet, dass**
1.4 die Führungseinrichtung (12) umlaufend arbeitet und
1.5 mehrere umlaufende Leitelemente (12) aufweist, deren Bahn im Bereich der Übergabestelle mit dem Weg der Fächerreihe übereinstimmt.

2. Vorrichtung nach Anspruch 1, bei der der Abstand zwischen dem Abgabeende (10) der Zuführeinrichtung (5) und der Oberkante (11) von Trennungen zwischen den Fächern (1) größer ist als die Hälfte der Länge der Produkte (17) in Bewegungsrichtung gemessen.

3. Vorrichtung nach Anspruch 1 oder 2, bei der die synchron mit der Reihe von Fächern (1) mitbewegten Leitelemente (12) als Leitschaufeln ausgebildet sind.

4. Vorrichtung nach Anspruch 3, bei der die Leitelemente (12) derart angeordnet sind, dass sie eine Verlängerung des der Abgabestelle zugeordneten Fachs (1) der Reihe von Fächern (1) bilden.

5. Vorrichtung nach einem der vorhergehenden Ansprüche, bei der die Führungseinrichtung derart angeordnet ist, dass sie nur im Bereich der Übergabestelle zwischen der Zuführeinrichtung (5) und der Fächerreihe wirksam ist.

6. Vorrichtung nach einem der vorhergehenden Ansprüche, bei der die Leitelemente (12) derart geführt sind, dass das zwischen zwei Produkten angeordnete Leitelement (12) quer zur Bewegungsrichtung der Reihe von Fächern heraus bewegt wird.

7. Vorrichtung nach einem der vorhergehenden Ansprüche, bei der die Leitelemente (12) an einer Kette (14) angebracht sind.

## Claims

1. Apparatus for forming stacks of products (17), comprising
1.1 a basically horizontal, continuously moving array of compartments (1),
1.2 a feeder (5), which
1.2.1 conveys individual products (17) one after the other to a transfer point above the array of compartments (1) and
1.2.2 drops or casts the products (17) into the compartments (1), and with
1.3 a guide apparatus (12) which
1.3.1 in each case guides a product (17) between the transfer point of the feeder and the compartment (1) assigned to the product (17)
**characterised in that**
1.4 the guide apparatus (12) revolves and
1.5 shows a plurality of circumferential guide elements (12) whose course corresponds with the path of the array of compartments in the area of the transfer point.

2. Apparatus according to Claim 1 with which the distance between the transfer end of the feeder (5) and the top edge (11) of partitions between the compartments (1) is larger than half the length of the products (17) as measured in the movement direction.

3. Apparatus according to Claim 1 or 2 with which the guide elements (12) moved synchronously with the array of compartments (1) are formed as guide blades.

4. Apparatus according to Claim 3 with which the guide elements (12) are arranged in such a manner that they form an extension of the compartment (1) in the array of compartments (1) assigned to the transfer point.

5. Apparatus according to one of the preceding Claims with which the guide apparatus is arranged in such a manner that it is only effective in the area of the transfer point between the feeder (5) and the array of compartments.

6. Apparatus according to one of the preceding Claims with which the guide elements (12) can be controlled in such a manner that the guide element (12) arranged between two products is retracted across the movement direction of the array of compartments.

7. Apparatus according to one of the preceding Claims with which the guide elements (12) are arranged on a chain (14).

## Revendications

1. Dispositif destiné à former des piles de produits (17), comprenant
1.1 une rangée de compartiments (1) essentiellement horizontale, déplaçable en continu,
1.2 un dispositif d'alimentation (5) qui
1.2.1 transporte des produits individuels (17) les uns derrière les autres vers un point de distribution au-dessus de la rangée de compartiments (1) et qui
1.2.2 laisse tomber les produits (17) dans les compartiments (1) ou les jette, et comprenant
1.3 un dispositif de guidage (12) qui
1.3.1 guide respectivement un produit (17) entre le point de distribution du dispositif d'alimentation et le compartiment (1) attribué au produit (17),
**caractérisé en ce que**
1.4 le dispositif de guidage (12) fonctionne en circulation continue et
1.5 présente plusieurs éléments de guidage (12) en circulation, dont la trajectoire, dans la zone du point de transfert, coïncide avec la course de la rangée de compartiments.

2. Dispositif selon la revendication 1, dans lequel l'écart entre l'extrémité de distribution (10) du dispositif d'alimentation (5) et le bord supérieur (11) de séparations entre les compartiments (1) est supérieur à la moitié de la longueur des produits (17) mesurée dans le sens de déplacement.

3. Dispositif selon la revendication 1 ou 2, dans lequel les éléments de guidage (12) déplacés de manière synchrone avec la rangée de compartiments (1) sont exécutés en tant que pales directrices.

4. Dispositif selon la revendication 3, dans lequel les éléments de guidage (12) sont disposés de telle manière qu'ils forment un prolongement du compartiment (1), attribué au point de distribution, de la rangée de compartiments (1).

5. Dispositif selon l'une quelconque des revendications précédentes, dans lequel le dispositif de guidage est disposé de telle manière qu'il agit seulement dans la zone du point de transfert entre le dispositif d'alimentation (5) et la rangée de compartiments.

6. Dispositif selon l'une quelconque des revendications précédentes, dans lequel les éléments de guidage (12) sont guidés de telle manière que l'élément de guidage (12) disposé entre deux produits est déplacé en sortant transversalement par rapport au sens de déplacement de la rangée de compartiments.

7. Dispositif selon l'une quelconque des revendications précédentes, dans lequel les éléments de guidage (12) sont installés sur une chaîne (14).
